# EUROPEAN PATENT APPLICATION

(11) **EP 4 376 286 A1**
(43) Date of publication of application: **29.05.2024**
(21) Application number: 22894141.5
(22) Date of filing: 25.03.2022
(51) Int. Cl.: H02M 7/68

(54) **BIDIRECTIONAL ENERGY STORAGE CONVERTER**

(30) Priority: 19.11.2021 CN 202111375171; 19.11.2021 CN 202122855326 U
(71) Applicant: Jingtsing Technology Ltd, Beijing 101100 (CN)
(72) Inventor: GUAN, Eryong, Beijing 101100 (CN); JI, Ruiqiu, Beijing 101100 (CN)
(74) Representative: DREISS Patentanwälte PartG mbB
(86) International application number: PCT/CN2022/083045
(87) International publication number: WO 2023/087595

(57) **Abstract**

Provided in the present application is a bidirectional energy storage converter, comprising: at least one bridge arm (100), wherein each bridge arm (100) comprises a first switch assembly (110), a second switch assembly (120), a third switch assembly (130) and a fourth switch assembly (140), which are sequentially connected in series, the first switch assembly (110) is connected to a positive electrode of a direct-current busbar and a third end of a resistor assembly (170), and the fourth switch assembly (140) is connected to a negative electrode of the direct-current busbar and a fourth end of the resistor assembly (170); and one end of a branch, which is formed by connecting a fifth switch assembly (150) and a sixth switch assembly (160) in series, is connected to a connection point of the first switch assembly (110) and the second switch assembly (120), and a first end of the resistor assembly (170), and another end thereof is connected to a connection point of the third switch assembly (130) and the fourth switch assembly (140), and a second end of the resistor assembly (170). Since a fifth switch assembly (150) and a sixth switch assembly (160) each comprise a diode and a switch tube, which are connected in parallel, the effect of shunting currents flowing through the fifth switch assembly (150) and the sixth switch assembly (160) is achieved, such that the values of the currents flowing through the fifth switch assembly (150) and the sixth switch assembly (160) are relatively low, thereby avoiding the problem in the related art of the junction temperature of a clamping diode being high.

## Description

### CROSS-REFERENCE TO RELATED APPLICATIONS

This disclosure claims priority to Chinese Patent Application No. 202111375171.9 filed with China National Intellectual Property Administration on November 19, 2021 and entitled "BIDIRECTIONAL ENERGY STORAGE CONVERTER", and claims priority to Chinese Patent Application No. 202122855326.0 filed with China National Intellectual Property Administration on November 19, 2021 and entitled "BIDIRECTIONAL ENERGY STORAGE CONVERTER", the entire contents of which are herein incorporated by reference.

### FIELD

The present disclosure relates to the field of energy storage, and specifically, relates to a bidirectional energy storage converter.

### BACKGROUND

In a related art, during the operation of a bidirectional energy storage converter under a low modulation ratio, that is, when charging or discharging is conducted at a high voltage, the junction temperature of a diode in the bidirectional converter is especially high, and the temperature of a semiconductor is not balanced, this renders that the converter needs to reduce capacity to be used.

### SUMMARY

The present disclosure aims to solve at least one of the problems in the prior art.

Therefore, the present disclosure provides a bidirectional energy storage converter.

In view of this, the present disclosure provides a bidirectional energy storage converter, and the bidirectional energy storage converter comprises at least one bridge arm, and each bridge arm comprises: a first switch assembly, and a first end of the first switch assembly is connected to a positive electrode of a direct-current busbar; a second switch assembly, and a first end of the second switch assembly is connected to a second end of the first switch assembly; a third switch assembly, and a first end of the third switch assembly is connected to a second end of the second switch assembly, and the first end of the third switch assembly is connected to an alternating-current busbar; a fourth switch assembly, and a first end of the fourth switch assembly is connected to a second end of the third switch assembly, and a second end of the fourth switch assembly is connected to a negative electrode of the direct-current busbar; a fifth switch assembly, and a first end of the fifth switch assembly is connected to the first end of the second switch assembly, and a second end of the fifth switch assembly is connected to a 0 electrode of the direct-current busbar; a sixth switch assembly, and a first end of the sixth switch assembly is connected to the second end of the fifth switch assembly, and a second end of the sixth switch assembly is connected to the first end of the fourth switch assembly; a resistor assembly, and a first end of the resistor assembly is connected to the first end of the fifth switch assembly, a second end of the resistor assembly is connected to the second end of the sixth switch assembly, a third end of the resistor assembly is connected to the first end of the first switch assembly, and a fourth end of the resistor assembly is connected to the fourth switch assembly; and, each of the first switch assembly, the second switch assembly, the third switch assembly, the fourth switch assembly, the fifth switch assembly and the sixth switch assembly comprises one switch tube and one diode.

The present disclosure defines a bidirectional energy storage converter, the bidirectional energy storage converter comprises at least one bridge arm, and each bridge arm comprises six switch assemblies, and, each switch assembly comprises one switch tube and one diode, and the switch tube and the diode of each switch assembly are connected in parallel. The first end of the first switch assembly and the second end of the fourth switch assembly are respectively connected to the positive electrode of the direct-current busbar and the negative electrode of the direct-current busbar, and the second switch assembly and the third switch assembly are connected between the first switch assembly and the fourth switch assembly. And the first end of the second switch assembly is connected to the second end of the first switch assembly, the first end of the third switch assembly is connected to the second end of the second switch assembly, the second end of the third switch assembly is connected to the first end of the fourth switch assembly, and a common end of the second switch assembly and the third switch assembly is connected to the alternating-current busbar. A common end of the first switch assembly and the second switch assembly is connected to the first end of the fifth switch assembly, a common end of the third switch assembly and the fourth switch assembly is connected to the second end of the sixth switch assembly, the second end of the fifth switch assembly is connected to the first end of the sixth switch assembly, and a common end of the fifth switch assembly and the sixth switch assembly is connected to the 0 electrode of the direct-current busbar.

It is worthy of explanation that when the bidirectional energy storage converter comprises multiple bridge arms, the common end of the fifth switch assembly and the sixth switch assembly of each of the multiple bridge arms is connected to the 0 electrode of the direct-current busbar, the first switch assembly and the fourth switch assembly are respectively connected to the positive electrode and the negative electrode of the direct-current busbar, and the common end of the second switch assembly and the third switch assembly is connected to the alternating-current busbar as an alternating-current connecting end.

In some embodiments, the bidirectional energy storage converter comprises three bridge arms, and the alternating-current connecting ends of the three bridge arms are respectively connected to an A phase, a B phase and a C phase of the alternating-current busbar.

In the prior art, for two clamping diodes, when the bidirectional energy storage converter operates in a working condition of a low modulation ratio, the junction temperature of the clamping diodes is especially high, this renders the unbalanced temperature of the semiconductor in the bidirectional energy storage converter. If it needs to continue operating in the working condition of a low modulation ratio, the bidirectional energy storage converter needs to reduce capacity to be used.

The present disclosure replaces the two clamping diodes in the bidirectional energy storage converter with the fifth switch assembly and the sixth switch assembly, as both of the fifth switch assembly and the sixth switch assembly comprise the diode and the switch tube connected in parallel, the effect of shunting the currents flowing through the fifth switch assembly and the sixth switch assembly is achieved, and the values of the currents flowing through the fifth switch assembly and the sixth switch assembly are made low, and thereby this avoids the problem in the related art that the junction temperature of the clamping diode is high.

Each bridge arm in the bidirectional energy storage converter is provided with the resistor assembly, and the resistor assembly comprises four connecting ends, and the first end, the second end, the third end and the fourth end are respectively connected to the fifth switch assembly, the sixth switch assembly, the first switch assembly and the fourth switch assembly. The resistor assembly can conduct voltage balance to the fifth switch assembly and the sixth switch assembly for clamping, so that the voltage of the fifth switch assembly and the sixth switch assembly for clamping is more balanced, and the resistor assembly can further conduct voltage balance to the first switch assembly, the second switch assembly, the third switch assembly and the fourth switch assembly in a major loop in the bidirectional energy storage converter, so that the voltage between the switch assemblies in the major loop of the bidirectional energy storage converter is more balanced.

In some embodiments, the switch tube is a controllable switch device, and the switch tube is limited to be periodically on or off in the case that the bidirectional energy storage converter conducts high voltage charging or high voltage discharging.

In these embodiments, when the bidirectional energy storage converter conducts high voltage charging or high voltage discharging, as the switch tube and the diode in the switch assemblies are connected in parallel, the switch tube is limited to start, the currents flowing through the diodes in the switch assemblies are shunted, and then the current flowing through the resistor is reduced. The currents flowing through the diodes can be shunted periodically through limiting the switch tube to be periodically on or off, so that the diodes have enough time to dissipate heat, and this avoids the problem that the temperature of the diodes in the switch assemblies rise too quickly.

In some other embodiments, the switch tube is a controllable switch device, in the case that the bidirectional energy storage converter conducts high voltage charging or high voltage discharging, the switch tube is limited to continuously keep an on state.

In these embodiments, when the bidirectional energy storage converter conducts high voltage charging or high voltage discharging, as the switch tube and the diode in the switch assemblies are connected in parallel, the switch tube is limited to start, the currents flowing through the diodes in the switch assemblies are shunted, and then the current flowing through the resistor is reduced. The currents flowing through the diodes can be shunted continuously through limiting the switch tube to continuously keep on, and this avoids the problem that the temperature of the diodes in the switch assemblies rise too quickly.

It can be understood that the first switch assembly, the second switch assembly, the third switch assembly, the fourth switch assembly, the fifth switch assembly and the sixth switch assembly can be configured to be the same hardware structure, and this simplifies the structure in the bidirectional energy storage converter and lowers the production cost of the bidirectional energy storage converter.

In addition, the above bidirectional energy storage converter provided in the present disclosure can further comprise following additional features.

In the above embodiment, the first switch assembly comprises: a first switch tube, and a first end of the first switch tube is connected to the positive electrode of the direct-current busbar; and a first diode, and a positive electrode of the first diode is connected to a second end of the first switch tube, and a negative electrode of the first diode is connected to the first end of the first switch tube; the second switch assembly comprises: a second switch tube, and a first end of the second switch tube is connected to the second end of the first switch tube; and a second diode, and a positive electrode of the second diode is connected to a second end of the second switch tube, and a negative electrode of the second diode is connected to the first end of the second switch tube; the third switch assembly comprises: a third switch tube, and a first end of the third switch tube is connected to the second end of the second switch tube, and the first end of the third switch tube is connected to the alternating-current busbar; and a third diode, and a positive electrode of the third diode is connected to a second end of the third switch tube, and a negative electrode of the third diode is connected to the first end of the third switch tube; the fourth switch assembly comprises: a fourth switch tube, and a first end of the fourth switch tube is connected to the second end of the third switch tube, and a second end of the fourth switch tube is connected to the negative electrode of the direct-current busbar; and a fourth diode, and a positive electrode of the fourth diode is connected to a second end of the fourth switch tube, and a negative electrode of the fourth diode is connected to the first end of the fourth switch tube; the fifth switch assembly comprises: a fifth switch tube, and a first end of the fifth switch tube is connected to the first end of the second switch tube, and a second end of the fifth switch tube is connected to the 0 electrode of the direct-current busbar; and a fifth diode, and a positive electrode of the fifth diode is connected to a second end of the fifth switch tube, and a negative electrode of the fifth diode is connected to the first end of the fifth switch tube; and the sixth switch assembly comprises: a sixth switch tube, and a first end of the sixth switch tube is connected to the second end of the fifth switch tube, and a second end of the sixth switch tube is connected to the first end of the fourth switch tube; and a sixth diode, and a positive electrode of the sixth diode is connected to a second end of the sixth switch tube, and a negative electrode of the sixth diode is connected to the first end of the sixth switch tube.

In the embodiment, each of the first switch assembly, the second switch assembly, the third switch assembly, the fourth switch assembly, the fifth switch assembly and the sixth switch assembly is provided with the diode and the switch tube. And the first switch tube, the second switch tube, the third switch tube and the fourth switch tube are connected end to end, and the first end of the first switch tube is connected to the positive electrode of the direct-current busbar, and the second end of the fourth switch tube is connected to the negative electrode of the direct-current busbar. The first end of the fifth switch tube is connected to the common end of the first switch tube and the second switch tube, the second end of the sixth switch tube is connected to the common end of the third switch tube and the fourth switch tube, the common end of the fifth switch tube and the sixth switch tube is connected to the 0 electrode of the direct-current busbar, and the common end of the second switch tube and the third switch tube is connected to the alternating-current busbar. The first switch tube, the second switch tube, the third switch tube, the fourth switch tube, the fifth switch tube and the sixth switch tube are respectively connected to the first diode, the second diode, the third diode, the fourth diode, the fifth diode and the sixth diode in parallel.

And the fifth diode and the sixth diode are the clamping diodes of the bidirectional energy storage converter, through connecting the fifth switch tube and the sixth switch tube with the fifth diode and the sixth diode in parallel, this avoids the problem that the fifth diode and the sixth diode heat quickly in the case that the bidirectional energy storage converter conducts high voltage charging and high voltage discharging.

It is worthy of explanation that the direct-current busbar uses a compact stacked busbar technology of an ultra low stray inductance. Distributed inductance can be lowered effectively.

The resistor assembly comprises a first resistor, a first end of the first resistor is connected to the first end of the fifth switch assembly, and a second end of the first resistor is connected to the second end of the sixth switch assembly.

In the embodiment, the resistor assembly comprises the first resistor.

The two ends of the first resistor are respectively connected to the first end of the fifth switch assembly and the second end of the sixth switch assembly, that is, the two ends of the first resistor are respectively connected to the two switch assemblies for clamping. Through connecting the two switch assemblies for clamping with the first resistor, this can ensure that the voltage of the two switch assemblies for clamping is more balanced during the operation of the bidirectional energy storage converter.

The resistor assembly comprises: a second resistor, and a first end of the second resistor is connected to the first end of the first switch assembly; and a third resistor, and a first end of the third resistor is connected to a second end of the second resistor, and a second end of the third resistor is connected to the second end of the fourth switch assembly.

In the embodiment, the resistor assembly comprises the second resistor and the third resistor.

The second resistor is in series connection to the third resistor, the second resistor is further connected to the first end of the first switch assembly, and the third resistor is further connected to the fourth switch assembly. Through arranging the second resistor and the third resistor which are in series connection on the major loop of the bidirectional energy storage converter, this achieves the function of balancing the voltage of the first switch assembly, the second switch assembly, the third switch assembly and the fourth switch assembly on the major loop through the second resistor and the third resistor, and can ensure that the voltages of the four switch assemblies on the major loop are more balanced during the operation of the bidirectional energy storage converter.

In any of the above embodiments, each bridge arm comprises: a first capacitor, and a first end of the first capacitor is connected to the positive electrode of the direct-current busbar; and a second capacitor, and a first end of the second capacitor is connected to a second end of the first capacitor and the 0 electrode of the direct-current busbar, and a second end of the second capacitor is configured to connect to the negative electrode of the direct-current busbar.

In the embodiment, the first capacitor is provided between the positive electrode the direct-current busbar and the 0 electrode, and the second capacitor is provided between the negative electrode of the direct-current busbar and 0 electrode. Through disposing the capacitors among the positive electrode, the 0 electrode and the negative electrode of the direct-current busbar, this can ensure the stability of a direct-current voltage.

In any of the above embodiments, the bidirectional energy storage converter further comprises a heat sink, disposed corresponding to at least one bridge arm.

In the embodiment, the bidirectional energy storage converter is further provided with the heat sink. The heat sink is provided inside the bidirectional energy storage converter, and the heat sink is disposed corresponding to the bridge arm in the bidirectional energy storage converter. Heat dissipating can be conducted to electronic components in the bridge arm of the bidirectional energy storage converter through the heat sink.

In some other embodiments, the bridge arm is arranged attached to the heat sink.

In these embodiments, the heat sink and the bridge arm are arranged to contact each other, and thus the contact area between the electronic components on the bridge arm and the heat sink can be enhanced, and thus the heat dissipation effect of the heat sink to the electronic components on the bridge arm is improved.

In some other embodiments, the bridge arm is disposed on the heat sink.

In these embodiments, through directly connecting the circuit structure on the bridge arm of the bidirectional energy storage converter with the heat sink, specifically, connecting the circuit board of the circuit structure with the heat sink, the stability of the contact between the heat sink and the bridge arm can further be ensured in a precondition of improving the heat dissipating effect of the heat sink to the circuit structure.

It is worthy of explanation that the heat sink can be selected from one or the combination of a plate type heat exchanger and a heat dissipation fin. The heat sink can further choose an air-cooled or water-cooled heat dissipation assembly.

In any of the above embodiments, the first switch assembly and the fifth switch assembly are a first module; the fourth switch assembly and the sixth switch assembly are a second module; the second switch assembly and the third switch assembly are a third module; and the first module, the second module and the third module are modules of the same model.

In the embodiment, the first switch assembly and the fifth switch assembly are integrated to be the first module; the fourth switch assembly and the sixth switch assembly are integrated to be the second module; the second switch assembly and the third switch assembly are integrated to be the third module. Through integrating two switch assemblies into one module, the controls occupied by the circuit structure in the bidirectional energy storage converter can be reduced. Since each of the first module, the second module and the third module is disposed with two switch assemblies, the first module, the second module and the third module can choose the modules of the same model, and this reduces the purchasing cost of the modules, and thereby reduces the production cost of the bidirectional energy storage converter.

It is worthy of explanation that the first switch assembly, the fifth switch assembly, the sixth switch assembly and the fourth switch assembly are all connected to a direct-current bus, and thus, the first switch assembly and the fifth switch assembly which are close to each other are integrated to be the first module, and the fourth switch assembly and the sixth switch assembly which are close to each other are integrated to be the second module, and thus, the current path between the direct-current bus and the first module and the second module can be reduced. The common end of the second switch assembly and the third switch assembly is connected to an alternating-current bus, and thus the second switch assembly and the third switch assembly which are close to each other are integrated to be the third module, and the current path between the alternating-current bus and the second module can be reduced. Through the arrangement of integrating the first switch assembly, the second switch assembly, the third switch assembly, the fourth switch assembly, the fifth switch assembly and the sixth switch assembly in pairs, the present disclosure not only reduces the production cost of the bidirectional energy storage converter, but also can reduce the commutation path of the bidirectional energy storage converter, and further lowers the excessively high temperature of electronic components in bidirectional energy storage converter.

In any of the above embodiments, the first module and the second module are arranged successively along a first direction, and the first module and the third module are arranged successively along a second direction.

In the embodiment, the first module and the second module are distributed side by side on the heat sink, since both the first module and the second module are connected to the direct-current busbar, distributing the first module and the second module side by side on the heat sink can render that the first module and the second module are relatively close to the direct-current busbar, and staggering the third module from the first module and the second module can avoid that the lines between the first module and the second module and the third module will intersect the lines between the first module and the second module, the heat dissipating effect to the first module, the second module and the third module and to the lines among the modules is enhanced in a precondition of ensuring a relatively small current path among the first module, the second module and the third module.

It is worthy of explanation that gaps are provided among the first module, the second module and the third module, which further improve the heat dissipation effect among the first module, the second module and the third module.

In any of the above embodiments, the first switch assembly and the second switch assembly are the first module, the third switch assembly and the fourth switch assembly are the second module, and the fifth switch assembly and the sixth switch assembly are the third module; and the first module, the second module and the third module are modules of the same model.

In the embodiment, the first switch assembly and the second switch assembly are integrated to be the first module; the third switch assembly and the fourth switch assembly are integrated to be the second module; the fifth switch assembly and the sixth switch assembly are integrated to be the third module. Through integrating two switch assemblies into one module, the controls occupied by the circuit structure in the bidirectional energy storage converter can be reduced. Since each of the first module, the second module and the third module is disposed with two switch assemblies, the first module, the second module and the third module can choose modules of the same model, and this reduces the purchasing cost of the modules, and thereby reduces the production cost of the bidirectional energy storage converter.

It is worthy of explanation that both the fifth switch assembly and the sixth switch assembly are switch assemblies for clamping in the bidirectional energy storage converter, the common end of the fifth switch assembly and the sixth switch assembly is connected to the 0 electrode of the direct-current busbar, and the fifth switch assembly and the sixth switch assembly are integrated to be the third module. The first switch assembly and the second switch assembly are connected to the positive electrode of the direct-current busbar, and the first switch assembly and the second switch assembly are integrated to be the first module. The third switch assembly and the fourth switch assembly are connected to the negative electrode of the direct-current busbar. The respective switch assemblies are integrated according to the above methods, so that each of the first module, the second module and the third module is connected to the direct-current busbar, and therefore, it can be ensured that the distance among the three modules is disposed relatively small on the basis that the lines of the three modules do not coincide each other, thereby reducing the space occupied by the electronic components on the bridge arm in the bidirectional energy storage converter.

In any of the above embodiments, the first module, the second module and the third module are arranged successively along the extending direction of the heat sink.

In the embodiment, all of the first module, the second module and the third module are connected to the direct-current busbar, and both the second module and the third module are connected to the alternating-current busbar, and thus, the first module, the second module and the third module can be arranged side by side. Since the heat sink is used for dissipating heat for the first module, the second module and the third module, then the size of the heat sink adapts to the size of the first module, the second module and the third module, and then this not only can reduce the space occupied by the electronic components, but also can reduce the space occupied by the heat sink corresponding to the electronic components.

The additional aspects and advantages of the present disclosure will be obvious in the following description, or can be understood through the implementation of the present disclosure.

### BRIEF DESCRIPTION OF THE DRAWINGS

The above and/or additional aspects and advantages of the present disclosure will be obvious and understood easily from the following description of the embodiments in combination with the accompanying drawings.
FIG. 1 is a first schematic view of the structure of a bridge arm in a bidirectional energy storage converter according to an embodiment of the present disclosure;
FIG. 2 is a second schematic view of the structure of a bridge arm in a bidirectional energy storage converter according to an embodiment of the present disclosure;
FIG. 3 is a first schematic view of the structure of a bidirectional energy storage converter according to an embodiment of the present disclosure;
FIG. 4 is a third schematic view of the structure of a bridge arm in a bidirectional energy storage converter according to an embodiment of the present disclosure; and
FIG. 5 is a second schematic view of the structure of a bidirectional energy storage converter according to an embodiment of the present disclosure.

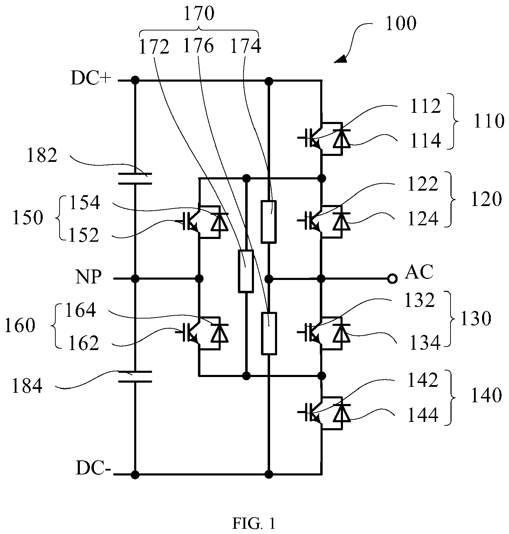

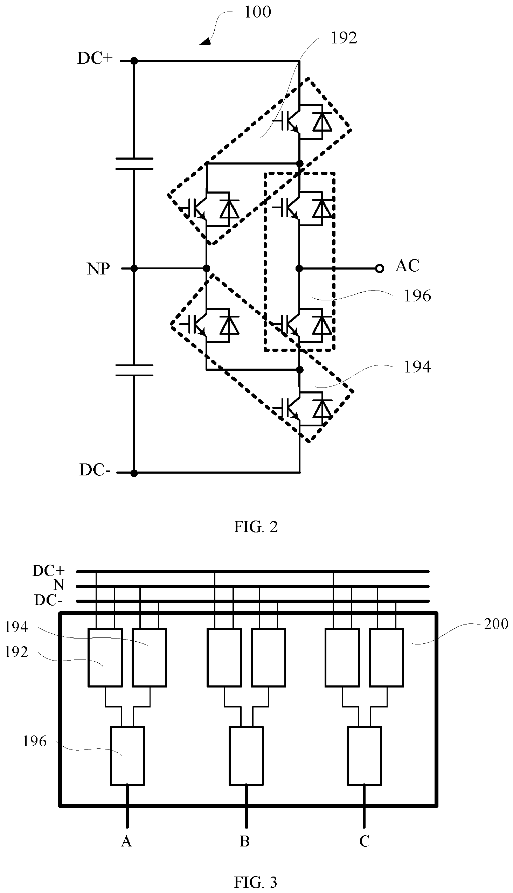

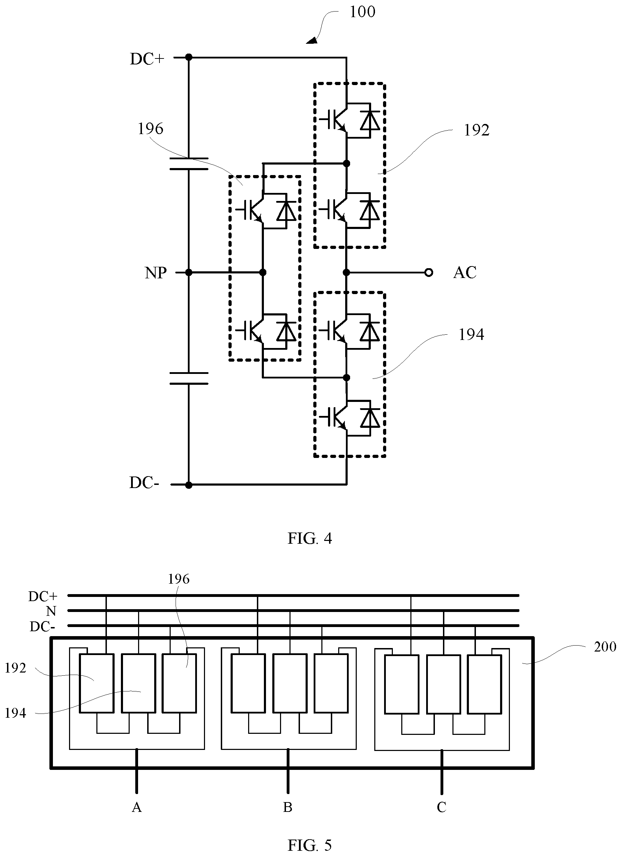

And the corresponding relationships between the reference signs and the component names in FIG. 1 to FIG. 5 are as follows:

100 bridge arm; 110 first switch assembly; 112 first switch tube; 114 first diode; 120 second switch assembly; 122 second switch tube; 124 second diode; 130 third switch assembly; 132 third switch tube; 134 third diode; 140 fourth switch assembly; 142 fourth switch tube; 144 fourth second diode; 150 fifth switch assembly; 152 fifth switch tube; 154 fifth diode; 160 sixth switch assembly; 162 sixth switch tube; 164 sixth diode; 170 resistor assembly; 172 first resistor; 174 second resistor; 176 third resistor; 182 first capacitor; 184 second capacitor; 192 first module; 194 second module; 196 third module; and 200 heat sink.

### DETAILED DESCRIPTION OF THE DISCLOSURE

To more clearly understand the above purposes, features and advantages of the present disclosure, the present disclosure will be further detailed hereinafter in combination with the accompanying drawings and embodiments. It should be indicated that in the case of no conflict, the embodiments and the features in the embodiments of the present disclosure can be combined with each other.

Many details are illustrated in the following description for the convenience of a thorough understanding to the present disclosure, but the present disclosure can further be implemented using other embodiments other than these described herein. Therefore, the protection scope of the present disclosure is not limited to the specific embodiments disclosed in the following text.

A bidirectional energy storage converter according to some embodiments of the present disclosure is described in the following by referring to FIG. 1 to FIG. 5.

As shown in FIG. 1, an embodiment according to the first aspect of the present embodiment provides a bidirectional energy storage converter, comprising at least one bridge arm 100, and each bridge arm 100 comprises a first switch assembly 110, a second switch assembly 120, the third switch assembly 130, the fourth switch assembly 140, the fifth switch assembly 150, the sixth switch assembly 160 and the resistor assembly 170.

A first end of the first switch assembly 110 is connected to a positive electrode of a direct-current busbar;
a first end of the second switch assembly 120 is connected to a second end of the first switch assembly 110;
a first end of the third switch assembly 130 is connected to a second end of the second switch assembly 120, and the first end of the third switch assembly 130 is connected to an alternating-current busbar;
a first end of the fourth switch assembly 140 is connected to a second end of the third switch assembly 130, and a second end of the fourth switch assembly 140 is connected to a negative electrode of the direct-current busbar;
a first end of the fifth switch assembly 150 is connected to the first end of the second switch assembly 120, and a second end of the fifth switch assembly 150 is connected to a 0 electrode of the direct-current busbar;
a first end of the sixth switch assembly 160 is connected to the second end of the fifth switch assembly 150, and a second end of the sixth switch assembly 160 is connected to the first end of the fourth switch assembly 140; and
a first end of the resistor assembly 170 is connected to the first end of the fifth switch assembly 150, a second end of the resistor assembly 170 is connected to the second end of the sixth switch assembly 160, a third end of the resistor assembly 170 is connected to the first end of the first switch assembly 110, and a fourth end of the resistor assembly 170 is connected to the second end of the fourth switch assembly 140. And each of the first switch assembly 110, the second switch assembly 120, the third switch assembly 130, the fourth switch assembly 140, the fifth switch assembly 150 and the sixth switch assembly 160 comprises one switch tube and one diode.

The present disclosure defines a bidirectional energy storage converter, the bidirectional energy storage converter comprises at least one bridge arm 100, and each bridge arm 100 comprises six switch assemblies, and each switch assembly comprises one switch tube and one diode, and the switch tube and the diode of each switch assembly are connected in parallel. The first end of the first switch assembly 110 and the second end of the fourth switch assembly 140 are respectively connected to the positive electrode of the direct-current busbar and the negative electrode of the direct-current busbar, and the second switch assembly 120 and the third switch assembly 130 are connected between the first switch assembly 110 and the fourth switch assembly 140. And the first end of the second switch assembly 120 is connected to the second end of the first switch assembly 110, the first end of the third switch assembly 130 is connected to the second end of the second switch assembly 120, the second end of the third switch assembly 130 is connected to the first end of the fourth switch assembly 140, and a common end of the second switch assembly 120 and the third switch assembly 130is connected to the alternating-current busbar. A common end of the first switch assembly 110 and the second switch assembly 120 is connected to the first end of the fifth switch assembly 150, a common end of the third switch assembly 130 and the fourth switch assembly 140 is connected to the second end of the sixth switch assembly 160, the second end of the fifth switch assembly 150 is connected to the first end of the sixth switch assembly 160, and a common end of the fifth switch assembly 150 and the sixth switch assembly 160 is connected to the 0 electrode of the direct-current busbar.

It is worthy of explanation that when the bidirectional energy storage converter comprises multiple bridge arms 100, the common end of the fifth switch assembly 150 and the sixth switch assembly 160 of each of the multiple bridge arms 100 is connected to the 0 electrode of the direct-current busbar, the first switch assembly 110 and the fourth switch assembly 140 are respectively connected to the positive electrode and the negative electrode of the direct-current busbar, and the common end of the second switch assembly 120 and the third switch assembly 130 is connected to the alternating-current busbar as an alternating-current connecting end.

In some embodiments, the bidirectional energy storage converter comprises three bridge arms 100, and the alternating-current connecting ends of the three bridge arms 100 are respectively connected to an A phase, a B phase and a C phase of the alternating-current busbar.

In the prior art, for two clamping diodes when the bidirectional energy storage converter operates in a working condition of a low modulation ratio, the junction temperature of the clamping diodes is especially high, this renders the unbalanced temperature of the semiconductor in the bidirectional energy storage converter. If it needs to continue operating in the working condition of a low modulation ratio, the bidirectional energy storage converter needs to reduce capacity to be used.

The present embodiment replaces the two clamping diodes in the bidirectional energy storage converter with the fifth switch assembly 150 and the sixth switch assembly 160, as both of the fifth switch assembly 150 and the sixth switch assembly 160 comprise the diode and the switch tube connected in parallel, the effect of shunting the currents flowing through the fifth switch assembly 150 and the sixth switch assembly 160 is achieved, and the values of the currents flowing through the fifth switch assembly 150 and the sixth switch assembly 160 are made low, and thereby this avoids the problem in the related art that the junction temperature of the clamping diode is high.

Each bridge arm 100 in the bidirectional energy storage converter is provided with the resistor assembly 170, and the resistor assembly 170 comprises four connecting ends, and the first end, the second end, the third end and the fourth end are respectively connected to the fifth switch assembly 150, the sixth switch assembly 160, the first switch assembly 110 and the fourth switch assembly 140. The resistor assembly 170 can conduct voltage balance to the fifth switch assembly 150 and the sixth switch assembly 160 for clamping, so that the voltage of the fifth switch assembly 150 and the sixth switch assembly 160 for clamping is more balanced, and the resistor assembly 170 can further conduct voltage balance to the first switch assembly 110, the second switch assembly 120, the third switch assembly 130 and the fourth switch assembly 140 in a major loop in the bidirectional energy storage converter, so that the voltage between the switch assemblies in the major loop of the bidirectional energy storage converter is more balanced.

In some embodiments, the switch tube is a controllable switch device, and the switch tube is limited to be periodically on or off in the case that the bidirectional energy storage converter conducts high voltage charging or high voltage discharging.

In these embodiments, when the bidirectional energy storage converter conducts high voltage charging or high voltage discharging, as the switch tube and the diode in the switch assemblies are connected in parallel, the switch tube is limited to start, the currents flowing through the diodes in the switch assemblies are shunted, and then the current flowing through the resistor is reduced. The currents flowing through the diodes can be shunted periodically through limiting the switch tube to be periodically on or off, so that the diodes have enough time to dissipate heat, and this avoids the problem that the temperature of the diodes in the switch assemblies rise too quickly.

In some other embodiments, the switch tube is a controllable switch device, in the case that the bidirectional energy storage converter conducts high voltage charging or high voltage discharging, the switch tube is limited to continuously keep an on state.

In these embodiments, when the bidirectional energy storage converter conducts high voltage charging or high voltage discharging, as the switch tube and the diode in the switch assemblies are connected in parallel, the switch tube is limited to start, the currents flowing through the diodes in the switch assemblies are shunted, and then the current flowing through the resistor is reduced. The currents flowing through the diodes can be shunted continuously through limiting the switch tube to continuously keep on, and this avoids the problem that the temperature of the diodes in the switch assemblies rise too quickly.

It can be understood that the first switch assembly 110, the second switch assembly 120, the third switch assembly 130, the fourth switch assembly 140, the fifth switch assembly 150 and the sixth switch assembly 160 can be configured to be the same hardware structure, and this simplifies the structure in the bidirectional energy storage converter and lowers the production cost of the bidirectional energy storage converter.

The bidirectional energy storage converter can limit the charging and discharging processes of a battery, conduct the converting between an alternating-current and a direct-current, and can directly supply power to an alternating-current load in the case that there is not any power grid.

As shown in FIG. 1, in the above embodiment, the first switch assembly 110 comprises a first switch tube 112 and a first diode 114.

A first end of the first switch tube 112 is connected to the positive electrode of the direct-current busbar;
a positive electrode of the first diode 114 is connected to a second end of the first switch tube 112, and a negative electrode of the first diode 114 is connected to the first end of the first switch tube 112; and
the second switch assembly 120 comprises a second switch tube 122 and a second diode 124.

A first end of the second switch tube 122 is connected to the second end of the first switch tube 112;
a positive electrode of the second diode 124 is connected to the second end of the second switch tube 122, and a negative electrode of the second diode 124 is connected to the first end of the second switch tube 122; and
the third switch assembly 130 comprises a third switch tube 132 and a third diode 134.

A first end of the third switch tube 132 is connected to a second end of the second switch tube 122, and the first end of the third switch tube 132 is connected to the alternating-current busbar;
a positive electrode of the third diode 134 is connected to a second end of the third switch tube 132, and a negative electrode of the third diode 134 is connected to the first end of the third switch tube 132; and
the fourth switch assembly 140 comprises a fourth switch tube 142 and a fourth diode 144.

A first end of the fourth switch tube 142 is connected to the second end of the third switch tube 132, and a second end of the fourth switch tube 142 is connected to the negative electrode of the direct-current busbar;
a positive electrode of the fourth diode 144 is connected to a second end of the fourth switch tube 142, and a negative electrode of the fourth diode 144 is connected to the first end of the fourth switch tube 142; and
the fifth switch assembly 150 comprises a fifth switch tube 152 and a fifth diode 154.

A first end of the fifth switch tube 152 is connected to the first end of the second switch tube 122, and a second end of the fifth switch tube 152 is connected to the 0 electrode of the direct-current busbar;
a positive electrode of the fifth diode 154 is connected to a second end of the fifth switch tube 152, and a negative electrode of the fifth diode 154 is connected to the first end of the fifth switch tube 152; and
the sixth switch assembly 160 comprises a sixth switch tube 162 and a sixth diode 164.

A first end of the sixth switch tube 162 is connected to the second end of the fifth switch tube 152, and a second end of the sixth switch tube 162 is connected to the first end of the fourth switch tube 142; and
a positive electrode of the sixth diode 164 is connected to a second end of the sixth switch tube 162, and a negative electrode of the sixth diode 164 is connected to the first end of the sixth switch tube 162.

In the embodiment, each of the first switch assembly 110, the second switch assembly 120, the third switch assembly 130, the fourth switch assembly 140, the fifth switch assembly 150 and the sixth switch assembly 160is provided with the diode and the switch tube. And the first switch tube 112, the second switch tube 122, the third switch tube 132 and the fourth switch tube 142 are connected end to end, and the first end of the first switch tube 112 is connected to the positive electrode of the direct-current busbar, and the second end of the fourth switch tube 142is connected to the negative electrode of the direct-current busbar. The first end of the fifth switch tube 152 is connected to the common end of the first switch tube 112 and the second switch tube 122, the second end of the sixth switch tube 162 is connected to the common end of the third switch tube 132 and the fourth switch tube 142, the common end of the fifth switch tube 152 and the sixth switch tube 162 is connected to the 0 electrode of the direct-current busbar, and the common end of the second switch tube 122 and the third switch tube 132 is connected to the alternating-current busbar. The first switch tube 112, the second switch tube 122, the third switch tube 132, the fourth switch tube 142, the fifth switch tube 152 and the sixth switch tube 162 are respectively connected to the first diode 114, the second diode 124, the third diode 134, the fourth diode 144, the fifth diode 154 and the sixth diode 164 in parallel.

And the fifth diode 154 and the sixth diode 164 are the clamping diodes of the bidirectional energy storage converter, through connecting the fifth switch tube 154 and the sixth switch tube 164 with the fifth diode 152 and the sixth diode 162 in parallel, this avoids the problem that the fifth diode 154 and the sixth diode 164 heat quickly in the case that the bidirectional energy storage converter conducts high voltage charging and high voltage discharging.

It is worthy of explanation that the direct-current busbar uses a compact stacked busbar technology of an ultra low stray inductance. Distributed inductance can be lowered effectively.

As shown in FIG. 1, in any of the above embodiments, the resistor assembly 170 further comprises a first resistor 172, a second resistor 174 and a third resistor 176.

And a first end of the first resistor 172 is connected to the first end of the fifth switch assembly 150, and a second end of the first resistor 172 is connected to the second end of the sixth switch assembly 160; a first end of the second resistor 174 is connected to the first end of the first switch assembly 110; and a first end of the third resistor 176 is connected to a second end of the second resistor 174, and a second end of the third resistor 176 is connected to the second end of the fourth switch assembly 140.

In the embodiment, the resistor assembly 170comprises the first resistor 172, the second resistor 174 and the third resistor 176.

The two ends of the first resistor 172 are respectively connected to the first end of the fifth switch assembly 150 and the second end of the sixth switch assembly 160, that is, the two ends of the first resistor 172 are respectively connected to the two switch assemblies for clamping. Through connecting the two switch assemblies for clamping with the first resistor 172, this can ensure that the voltage of the two switch assemblies for clamping is more balanced during the operation of the bidirectional energy storage converter.

The second resistor 174 is in series connection to the third resistor 176, the second resistor 174 is further connected to the first end of the first switch assembly 110, and the third resistor 176 is further connected to the fourth switch assembly 140. Through arranging the second resistor 174 and the third resistor 176 which are in series connection on the major loop of the bidirectional energy storage converter, this achieves the function of balancing the voltage of the first switch assembly 110, the second switch assembly 120, the third switch assembly 130 and the fourth switch assembly 140 on the major loop through the second resistor 174 and the third resistor 176, and can ensure that the voltages of the four switch assemblies on the major loop are more balanced during the operation of the bidirectional energy storage converter.

As shown in FIG. 1, in any of the above embodiments, each bridge arm 100further comprises a first capacitor 182, a second capacitor 184.

And a first end of the first capacitor 182 is connected to the positive electrode of the direct-current busbar; a first end of the second capacitor 184 is connected to a second end of the first capacitor 182 and the 0 electrode of the direct-current busbar, and a second end of the second capacitor 184 is configured to connect to the negative electrode of the direct-current busbar.

In the embodiment, the first capacitor 182 is provided between the positive electrode the direct-current busbar and the 0 electrode, and the second capacitor 184 is provided between the negative electrode of the direct-current busbar and 0 electrode. Through disposing the capacitors among the positive electrode, the 0 electrode and the negative electrode of the direct-current busbar, this can ensure the stability of a direct-current voltage.

As shown in FIG. 1, FIG. 3 and FIG. 5, in any of the above embodiments, the bidirectional energy storage converter further comprises a heat sink 200. The heat sink 200 is disposed corresponding to at least one bridge arm 100.

In the embodiment, the bidirectional energy storage converter is further provided with the heat sink 200. The heat sink 200 is provided inside the bidirectional energy storage converter, and the heat sink 200 is disposed corresponding to the bridge arm 100 in the bidirectional energy storage converter. Heat dissipating can be conducted to electronic components in the bridge arm 100 of the bidirectional energy storage converter through the heat sink 200.

In some embodiments, the bridge arm 100 is arranged attached to the heat sink 200.

In these embodiments, the heat sink 200 and the bridge arm 100 are arranged to contact each other, and thus the contact area between the electronic components on the bridge arm 100 and the heat sink 200 can be enhanced, and thus the heat dissipation effect of the heat sink 200 to the electronic components on the bridge arm 100 is improved.

In some other embodiments, the bridge arm 100 is disposed on the heat sink 200.

In these embodiments, through directly connecting the circuit structure on the bridge arm 100 of the bidirectional energy storage converter with the heat sink 200, specifically, connecting the circuit board of the circuit structure with the heat sink 200, the stability of the contact between the heat sink200 and the bridge arm 100 can further be ensured in a precondition of improving the heat dissipating effect of the heat sink 200 to the circuit structure.

It is worthy of explanation that the heat sink 200 can be selected from one or the combination of a plate type heat exchanger and a heat dissipation fin. The heat sink 200 can further choose an air-cooled or water-cooled heat dissipation assembly.

As shown in FIG. 1, FIG. 2, FIG. 3, FIG. 4 and FIG. 5, in any of the above embodiments, the first switch assembly 110 and the fifth switch assembly 150 are a first module 192; the fourth switch assembly 140 and the sixth switch assembly 160 are a second module 194; the second switch assembly 120 and the third switch assembly 130 are a third module 196; and the first module 192, the second module 194 and the third module 196 are modules of the same model.

In the embodiment, the first switch assembly 110 and the fifth switch assembly 150 are integrated to be the first module 192; the fourth switch assembly 140 and the sixth switch assembly 160 are integrated to be the second module 194; the second switch assembly 120 and the third switch assembly 130 are integrated to be the third module 196. Through integrating two switch assemblies into one module, the controls occupied by the circuit structure in the bidirectional energy storage converter can be reduced. Since each of the first module 192, the second module 194 and the third module 196 is disposed with two switch assemblies, the first module 192, the second module194 and the third module 196 can choose the modules of the same model, and this reduces the purchasing cost of the modules, and thereby reduces the production cost of the bidirectional energy storage converter.

It is worthy of explanation that the first switch assembly 110, the fifth switch assembly 150, the sixth switch assembly 160 and the fourth switch assembly 140 are all connected to a direct-current bus, and thus, the first switch assembly 110 and the fifth switch assembly 150 which are close to each other are integrated to be the first module 192, and the fourth switch assembly 140 and the sixth switch assembly 160 which are close to each other are integrated to be the second module 194, and thus, the current path between the direct-current bus and the first module 192 and the second module 194 can be reduced. The common end of the second switch assembly 120 and the third switch assembly 130 is connected to an alternating-current bus, and thus the second switch assembly 120and the third switch assembly 130 which are close to each other are integrated to be the third module 196, and the current path between the alternating-current bus and the second module 194 can be reduced. Through the arrangement of integrating the first switch assembly 110, the second switch assembly 120, the third switch assembly 130, the fourth switch assembly 140, the fifth switch assembly 150 and the sixth switch assembly 160 in pairs, the present embodiment not only reduces the production cost of the bidirectional energy storage converter, but also can reduce the commutation path of the bidirectional energy storage converter, and further lowers the excessively high temperature of electronic components in the bidirectional energy storage converter.

As shown in FIG. 1, FIG. 2, FIG. 3, FIG. 4 and FIG. 5,in any of the above embodiments, the first module 192 and the second module 194 are arranged successively along a first direction, and the first module 192 and the third module 196 are arranged successively along a second direction.

In the embodiment, the first module 192 and the second module 194 are distributed side by side on the heat sink 200, since both the first module 192 and the second module 194 are connected to the direct-current busbar, distributing the first module 192 and the second module 194 side by side on the heat sink 200 can render that the first module 192 and the second module 194are relatively close to the direct-current busbar, and staggering the third module 196from the first module 192 and the second module 194 can avoid that the lines between the first module 192 and the second module 194 and the third module 196 will intersect the lines between the first module 192 and the second module 196, the heat dissipating effect to the first module 192, the second module194 and the third module 196 and to the lines among the modules is enhanced in a precondition of ensuring a relatively small current path among the first module 192, the second module 194 and the third module 196.

It is worthy of explanation that gaps are provided among the first module 192, the second module 194 and the third module 196, which further improve the heat dissipation effect among the first module 192, the second module 194 and the third module 196.

As shown in FIG. 1, FIG. 2, FIG. 3, FIG. 4 and FIG. 5,in any of the above embodiments, the first switch assembly 110 and the second switch assembly 120 are the first module 192, the third switch assembly 130 and the fourth switch assembly 140 are the second module 194, and the fifth switch assembly 150 and the sixth switch assembly 160 are the third module 196; and the first module 192, the second module 194 and the third module 196 are modules of the same model.

In the embodiment, the first switch assembly 110 and the second switch assembly 120are integrated to be the first module 192; the third switch assembly 130 and the fourth switch assembly 140 are integrated to be the second module 194; the fifth switch assembly 150 and the sixth switch assembly 160 are integrated to be the third module 196. Through integrating two switch assemblies into one module, the controls occupied by the circuit structure in the bidirectional energy storage converter can be reduced. Since each of the first module 192, the second module 194 and the third module 196 is disposed with two switch assemblies, the first module 192, the second module 194 and the third module 196 can choose modules of the same model, and this reduces the purchasing cost of the modules, and thereby reduces the production cost of the bidirectional energy storage converter.

It is worthy of explanation that both the fifth switch assembly 150 and the sixth switch assembly 160 are switch assemblies for clamping in the bidirectional energy storage converter, the common end of the fifth switch assembly 150 and the sixth switch assembly 160 is connected to the 0 electrode of the direct-current busbar, and the fifth switch assembly 150 and the sixth switch assembly 160 are integrated to be the third module 196. The first switch assembly 110 and the second switch assembly 120 are connected to the positive electrode of the direct-current busbar, and the first switch assembly 110 and the second switch assembly 120 are integrated to be the first module 192. The third switch assembly 130 and the fourth switch assembly 140 are connected to the negative electrode of the direct-current busbar. The respective switch assemblies are integrated according to the above methods, so that each of the first module 192, the second module 194 and the third module 196 is connected to the direct-current busbar, and therefore, it can be ensured that the distance among the three modules is disposed relatively small on the basis that the lines of the three modules do not coincide each other, thereby reducing the space occupied by the electronic components on the bridge arm 100 in the bidirectional energy storage converter.

As shown in FIG. 1, FIG. 2, FIG. 3, FIG. 4 and FIG. 5, in any of the above embodiments, the first module 192, the second module 194 and the third module 196 are arranged successively along the extending direction of the heat sink 200.

In the embodiment, all of the first module 192, the second module 194 and the third module 196 are connected to the direct-current busbar, and both the second module 194 and the third module 196 are connected to the alternating-current busbar, and thus, the first module 192, the second module 194 and the third module 196 can be arranged side by side. Since the heat sink 200 is used for dissipating heat for the first module 192, the second module 194 and the third module 196, then the size of the heat sink 200 adapts to the size of the first module 192, the second module 194 and the third module 196, and then this not only can reduce the space occupied by the electronic components, but also can reduce the space occupied by the heat sink 200 corresponding to the electronic components.

In the specification of the present disclosure, the term of "multiple" indicates two or more, unless otherwise explicitly specified or defined; the orientation or position relations indicated by the terms of "upper", "lower" and the like are based on the orientation or position relations shown in the accompanying drawings, and they are just intended to conveniently describe the present application and simplify the description, and are not intended to indicate or imply that the devices or units as indicated should have specific orientations or should be configured or operated in specific orientations, and then should not be construed as limitations to the present application; the terms of "connected to", "assembling", "fixing" and the like should be understood in a broad sense, for example, the term "connected to" may be a fixed connection, and may also be a removable connection, or an integral connection; and the term may be a direct connection and may also be an indirect connection through an intermediate medium. A person of ordinary skills in the art could understand the specific meanings of the terms in the present disclosure according to specific situations.

In the description of the present specification, the descriptions of the phrases "one embodiment", "some embodiments" and "specific embodiments" and the like mean that the specific features, structures, materials or characteristics described in combination with the embodiment(s) or example(s) are included in at least one embodiment or example of the present disclosure. In the specification, the schematic representation of the above phrases does not necessarily refer to the same embodiment or example. Moreover, the particular features, structures, materials or characteristics described may be combined in a suitable manner in any one or more of the embodiments or examples.

The descriptions above are only some embodiments of the present disclosure, and are not configured to limit the present disclosure. For a person skilled in the art, the present disclosure may have various changes and variations. Any modifications, equivalent substitutions, improvements, etc. made within the spirit and principle of the present disclosure shall all be included in the protection scope of the present disclosure.

## Claims

1. A bidirectional energy storage converter, comprising:
at least one bridge arm, wherein each bridge arm comprises:
a first switch assembly, wherein a first end of the first switch assembly is connected to a positive electrode of a direct-current busbar;
a second switch assembly, wherein a first end of the second switch assembly is connected to a second end of the first switch assembly;
a third switch assembly, wherein a first end of the third switch assembly is connected to a second end of the second switch assembly, and the first end of the third switch assembly is connected to an alternating-current busbar;
a fourth switch assembly, wherein a first end of the fourth switch assembly is connected to a second end of the third switch assembly, and a second end of the fourth switch assembly is connected to a negative electrode of the direct-current busbar;
a fifth switch assembly, wherein a first end of the fifth switch assembly is connected to the first end of the second switch assembly, and a second end of the fifth switch assembly is connected to a 0 electrode of the direct-current busbar;
a sixth switch assembly, wherein a first end of the sixth switch assembly is connected to the second end of the fifth switch assembly, and a second end of the sixth switch assembly is connected to the first end of the fourth switch assembly; and
a resistor assembly, wherein a first end of the resistor assembly is connected to the first end of the fifth switch assembly, a second end of the resistor assembly is connected to the second end of the sixth switch assembly, a third end of the resistor assembly is connected to the first end of the first switch assembly, and a fourth end of the resistor assembly is connected to the fourth switch assembly;
wherein, each of the first switch assembly, the second switch assembly, the third switch assembly, the fourth switch assembly, the fifth switch assembly and the sixth switch assembly comprises one switch tube and one diode.

2. The bidirectional energy storage converter according to claim 1, wherein,
the first switch assembly comprises:
a first switch tube, wherein a first end of the first switch tube is connected to the positive electrode of the direct-current busbar; and
a first diode, wherein a positive electrode of the first diode is connected to a second end of the first switch tube, and a negative electrode of the first diode is connected to the first end of the first switch tube;
the second switch assembly comprises:
a second switch tube, wherein a first end of the second switch tube is connected to the second end of the first switch tube; and
a second diode, wherein a positive electrode of the second diode is connected to a second end of the second switch tube, and a negative electrode of the second diode is connected to the first end of the second switch tube;
the third switch assembly comprises:
a third switch tube, wherein a first end of the third switch tube is connected to the second end of the second switch tube, and the first end of the third switch tube is connected to the alternating-current busbar; and
a third diode, wherein a positive electrode of the third diode is connected to a second end of the third switch tube, and a negative electrode of the third diode is connected to the first end of the third switch tube;
the fourth switch assembly comprises:
a fourth switch tube, wherein a first end of the fourth switch tube is connected to the second end of the third switch tube, and a second end of the fourth switch tube is connected to the negative electrode of the direct-current busbar;
a fourth diode, wherein a positive electrode of the fourth diode is connected to the second end of the fourth switch tube, and a negative electrode of the fourth diode is connected to the first end of the fourth switch tube;
the fifth switch assembly comprises:
a fifth switch tube, wherein a first end of the fifth switch tube is connected to the first end of the second switch tube, and a second end of the fifth switch tube is connected to the 0 electrode of the direct-current busbar;
a fifth diode, wherein a positive electrode of the fifth diode is connected to the second end of the fifth switch tube, and a negative electrode of the fifth diode is connected to the first end of the fifth switch tube; and
the sixth switch assembly comprises:
a sixth switch tube, wherein a first end of the sixth switch tube is connected to the second end of the fifth switch tube, and a second end of the sixth switch tube is connected to the first end of the fourth switch tube; and
a sixth diode, wherein a positive electrode of the sixth diode is connected to the second end of the sixth switch tube, and a negative electrode of the sixth diode is connected to the first end of the sixth switch tube.

3. The bidirectional energy storage converter according to claim 1, wherein, the resistor assembly comprises:
a first resistor, wherein a first end of the first resistor is connected to the first end of the fifth switch assembly, and a second end of the first resistor is connected to the second end of the sixth switch assembly.

4. The bidirectional energy storage converter according to claim 1, wherein, the resistor assembly comprises:
a second resistor, wherein, a first end of the second resistor is connected to the first end of the first switch assembly; and
a third resistor, wherein, a first end of the third resistor is connected to a second end of the second resistor, and a second end of the third resistor is connected to the second end of the fourth switch assembly.

5. The bidirectional energy storage converter according to claim 1, wherein, each bridge arm comprises:
a first capacitor, wherein, a first end of the first capacitor is connected to the positive electrode of the direct-current busbar; and
a second capacitor, wherein a first end of the second capacitor is connected to a second end of the first capacitor and the 0 electrode of the direct-current busbar, and a second end of the second capacitor is configured to connect the negative electrode of the direct-current busbar.

6. The bidirectional energy storage converter according to any of claims 1 to 5, further comprising:
a heat sink, disposed corresponding to at least one bridge arm.

7. The bidirectional energy storage converter according to claim 6, wherein,
the first switch assembly and the fifth switch assembly are a first module; the fourth switch assembly and the sixth switch assembly are a second module; the second switch assembly and the third switch assembly are a third module;
wherein the first module, the second module and the third module are modules of the same model.

8. The bidirectional energy storage converter according to claim 7, wherein,
the first module and the second module are arranged successively along a first direction, and the first module and the third module are arranged successively along a second direction.

9. The bidirectional energy storage converter according to claim 6, wherein,
the first switch assembly and the second switch assembly are the first module, the third switch assembly and the fourth switch assembly are the second module, and the fifth switch assembly and the sixth switch assembly are the third module;
wherein the first module, the second module and the third module are modules of the same model.

10. The bidirectional energy storage converter according to claim 9, wherein,
the first module, the second module and the third module are arranged successively along the extending direction of the heat sink.
